# EUROPEAN PATENT SPECIFICATION

(11) **EP 2 483 849 B1**
(45) Date of publication and mention of the grant of the patent: **11.12.2013**
(21) Application number: 10775694.2
(22) Date of filing: 29.09.2010
(51) Int. Cl.: G06K 19/077, G06K 19/04, B65D 51/28

(54) **TRANSPONDER AND METHOD FOR ITS APPLICATION**
TRANSPONDER UND VERFAHREN ZU SEINER ANWENDUNG
TRANSPONDEUR ET PROCÉDÉ POUR SON APPLICATION

(30) Priority: 29.09.2009 EE 200900075
(43) Date of publication of application: 08.08.2012
(73) Proprietor: Tallinn University Of Technology, 19086 Tallinn (EE)
(72) Inventor: TAMRE, Mart, EE74117 Maardu (EE); PÕDRA, Priit, EE13520 Tallinn (EE); PÕLDER, Ahti, EE10145 Tallinn (EE); JUURMA, Märt, EE11214 Tallinn (EE)
(86) International application number: PCT/EE2010/000015
(87) International publication number: WO 2011/038743

(56) References cited:
- EP-A2- 0 535 919
- FR-A1- 2 810 436

## Description

### Field of the invention

This invention relates to the field of design and application technologies of noncontact sensors used for tracing products and production processes. It provides a transponder that incorporates a sensor operating by different physical principles (for example electromagnetic, RFID, etc.), to be applied into the material of a product or a device, and its application technology that is suitable for marking relatively soft natural (for example wood) or artificial materials or products made of these materials by indenting the transponder into the material or product to be marked. Based on these features the invention will be used by the companies of forest and wood industry in the entire supply chain, including for example forest owners, lumbering companies, manufacturers of wood products, providers of wooden or plastic packaging solutions and logistics companies.

### Background of the invention

Known are the RAID transponders (WO2009050337A1) that are inserted into the machined groove of the material or spike-shaped transponders (S. Korten, C. Kaul, Application of RFID in the Timber Supply Chain, Croat. J. for Eng., 29(2008) 1, pp. 85-94 and GB2294846A) to be hammered into the material. Also are known the arrow-shaped transponders that are applied into the material by impact and consist of the rigid or semi rigid shell that is to be inserted into the material and the RFID sensor inside it (K. Nummila, RFID Technology for the Forest Industry, Tulevaisuuden saha-seminaari 27.5.2009 VTT, Finland). The shell has arrow shaped leading edge that enters the material in the case of impact and rectangular support element, that forms a tale of the arrow shaped leading edge for bearing the impact force so, that the arrow shaped leading edge of the transponder determines the direction by which the transponder is inserted into the material. Protruding arrow barbs are formed in the transition area of arrow shaped leading edge and rectangular support element. The support element is also designated for fastening the transponder into the respective holder of the impact device. When the transponder is striked into the material, the kinetic energy of the impact must be transferred to the trailing surface of the support element of the transponder. The impact energy must simultaneously be delivered also to the barbs of the arrow shaped edge, in order to avoid the compression of the barbs when the transponder enters the material and in order to avoid the intrusion of the material to be marked into the gap between the transponder and its holding seat, that is typical for fibrous materials, for example wood. FR2810436 discloses a transponder according to the preamble of claim 1. The transponder has a wedge shaped front end and can be hammered into wood.

Disadvantage of the transponder solution and its technology of insertion into the material described above is the relatively high percentage of transponder breakage during the application that significantly increases when the hardness of material increases and makes it extremely difficult to use the solution of this type in the cases of frozen or harder wood. This disadvantage is caused by the very uneven stress distribution in the transponder shell material when the impact force is applied. The dimensions of the transponder holder of the device applying the impact force and the dimensions of the transponder are assured with the accuracy of manufacturing tolerances. This means that the impact force energy shall in the moment of impact be first received by the trailing surface of the support element or by the protruding barbs of the arrow shaped edge, depending on the stochastic values of transponder and its holder dimensions in the limits of tolerance envelopes and the stresses in the transponder distribute extremely unevenly. As a consequence, the element that first receives the impact energy fails and the remaining impact energy is transferred to the other element (trailing surface of the support element or barbs of the arrow) and this still intact element fails too, since the surface receiving the energy is only a part of the transponder surface. Failure of that transponder during application is also caused by the fact that in order to facilitate the emplacement of the transponder support element into the holder of the impact force delivering device, the sides of the support element must have gaps, which means that the transponder material will be bulged outwards in the limits of this gap when the impact energy is applied and this causes additional cracking of the transponder. Since it is unrealistic to industrially manufacture the transponders and its application impact devices without measuring tolerances, it is impossible for that solution to assure the uniform stress distribution in the transponder material when the impact energy is applied to the transponder.

Since the sensor (for example RFID) is located inside the transponder (usually on the symmetry axis that coincides with the impact direction), the uneven distribution of stresses causes stress concentrations in the vicinity of the sensor and the cracks in the transponder initiate in the locations that are the most risky from the point of view of the transponder reliability. In addition to the failure mechanism described above, such transponders can be applied only in one certain direction, which means that in the case of automatic application it is important to assure the correct position of the transponder, for example in the applicator cassette. Transponder that has been rotated 180° cannot be attached into the applicator holder because the geometry does not fit, and also the transponder cannot be striked into the material in the direction of support element. These issues cause additional limitations to the application technology.

### Object and summary of the invention

The objective of the invention is to increase the durability and reliability of transponders that are inserted into the material by pressing or by impact and consequently to widen the areas of use of transponders and to simplify the application technology.

The objective of the invention is achieved by a transponder according to claim 1 and a method according claim 10. The transponder for materials marking comprises a rigid or semi rigid shell, in which the electromagnetic sensor is located (for example RFID). The shell has the wedge shaped leading edge and a support element that is located opposite to the leading edge and forms a wedge shaped tail of the wedge shaped leading edge for receiving the impact force. The wedge shaped leading edge defines the direction in which the transponder shall be inserted into the material to be marked. The support element is designated for fastening the transponder into the respective holder of the applicator device and the applicator device, during application, delivers pressing force to the transponder support element perpendicular to the surface of the material to be marked, in this way inserting the transponder into the material to be marked. The shell of the transponder has another wedge shaped edge, that are located so, that the intersecting side surfaces of the transponder form on sides obtuse angles and in the direction of the insertion into the material to be marked, form two sharp angles. One of the sharp angles and side surfaces intersecting there form the support element for fixing the transponder in the holder of the applicator device. The external shape of the transponder is chosen such, that it has two or three crossing symmetry planes, where one symmetry plane is perpendicular and the other one is parallel to the surface of the material to be marked. The obtuse angled side edges can be rounded if needed and the sides of the transponder may be designed as flat, concave or convex surfaces. In order to facilitate additional fixing in the holder, the side surfaces forming one wedge shaped edge can be equipped with fixing extrusions or grooves. When the transponder is, using the applicator device, pressed into the material to be marked, the compressing force is applied to the transponders side surfaces forming one of the wedge shaped edge so, that the vectors of the compressing forces applied to the side surfaces intersect in the symmetry plane of the transponder, that is parallel to the transponder insertion direction. This ensures the uniform and three-dimensional compression in the transponder material, that is the most favourable compression state for the material, when the material resistance to the failure increases significantly, compared to the one-dimensional state of compression. Holding seat of the applicator device, which forms a groove with the tip angle being equal or smaller than the tip angle of the wedge shaped edge of the transponder is used for pressing the transponder into the material to be marked. This compensates the possible influence of the transponder manufacturing deviations and holding seat manufacturing deviations to the distribution of compressive stresses when the transponder is being pressed into the material to be marked. Because the geometrical manufacturing deviations do not allow ideal conformance of the working surfaces of sharp angled seat and transponder's sharp angled support element, the seat's tip angle is preferably made a few degrees smaller than the tip angle of transponder's support element and during pressing the transponder's support element deforms so, that uniform pressure distribution is created along the whole loaded side surfaces, while the stress concentrations and transponder failures during the application are avoided. The seat of the applicator device is used for transponder indention into the material to be marked, where the distance between the seat's surfaces that holds the transponder *A* is less than the distance between the transponder's obtuse angled side edges B. This facilitates the situation where during the transponder pressing into the material to be marked, the material is squeezed by the transponder's sharp angled wedge shaped leading edge sidewards up to the width B and pressing the transponder deeper, the width of the slot in the material remains approximately equal to the dimension given by the transponder's side edges, and the seat, which's edge-to-edge distance is less than that width, does not contact the material, the material does not impede the pressing of the seat deeper and will not intrude between the transponder's support element and the seat, that might destroy the seat or significantly obstruct the movement of the transponder into the material. In order to avoid the seat wear and damage, the edges of the seat should preferably be made with such geometry, that the dimension *A* increases slightly in the direction of the edge that is used as support element of transponder. The seat of the applicator device is used for transponder indention into the material to be marked, that is equipped with fixing extrusions or grooves that, when the transponder is being applied, will interlock with the transponder's respective extrusions or grooves or transponder end surfaces so, that the transponder shall be fixed in the seat. Force will be applied to the applicator device that presses the transponder together with the seat into the material to be marked, due to the material elastic forces, pressure is applied to the transponder's side surfaces, that creates the friction force between the material to be marked and transponder shell that obstructs the outcome of the transponder from the material. That friction force exceeds the transponder's fixing force in the seat. After the pressing being finished, the applicator device with the seat will be moved away from the material to be marked, the transponder will automatically be freed from the seat due to the friction force between material and transponder and stays fixed in the material to be marked.

Unlike the transponders used so far, the new transponders are able to withstand without failure the forces that are 1.5 - 3 times higher due to the uniform distribution of internal stresses and three-dimensional state of stress inside the transponder material. This means, that the new transponder can be pressed or striked into the much harder materials, such as frozen wood or oak. The structure of the initial transponder often breaks when pressed into the frozen wood. Since the new transponder has symmetrical shape, initial sorting of transponders when loading the applicator device cassette in order to position the leading edges of all transponders into one direction, is no longer needed. It is sufficient to for example put the transponders on side or on one of the wedge shaped edge since the other wedge shaped edge is suitable for support element and the direction should not be distinguished.

### Brief description of the drawings

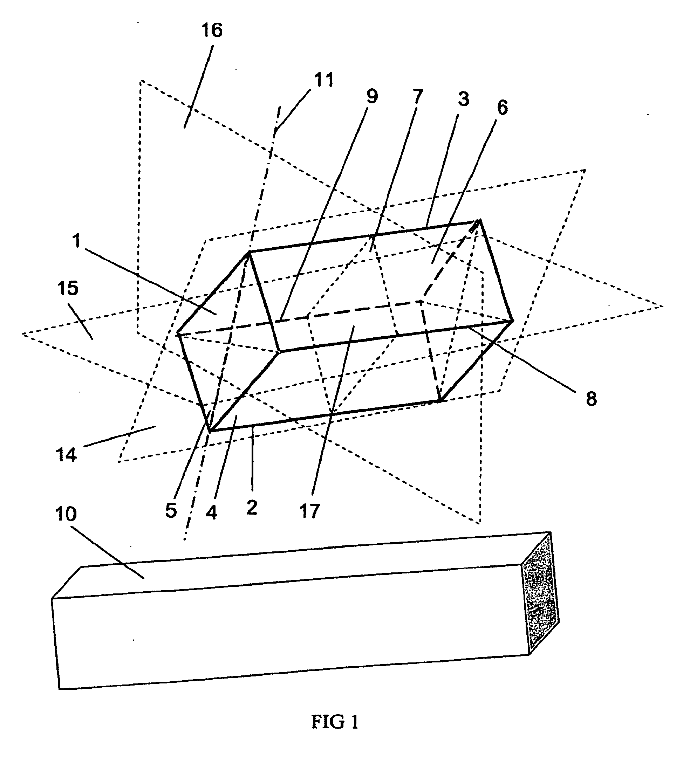

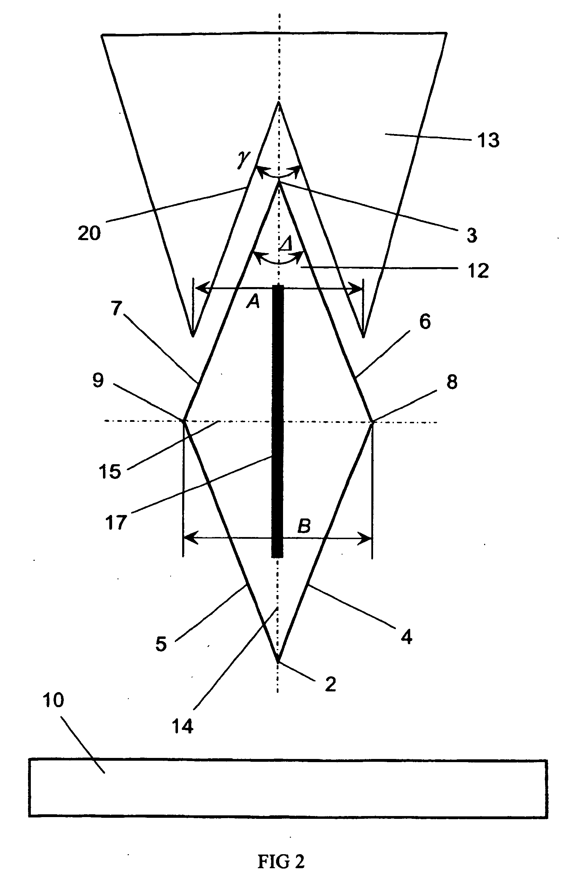

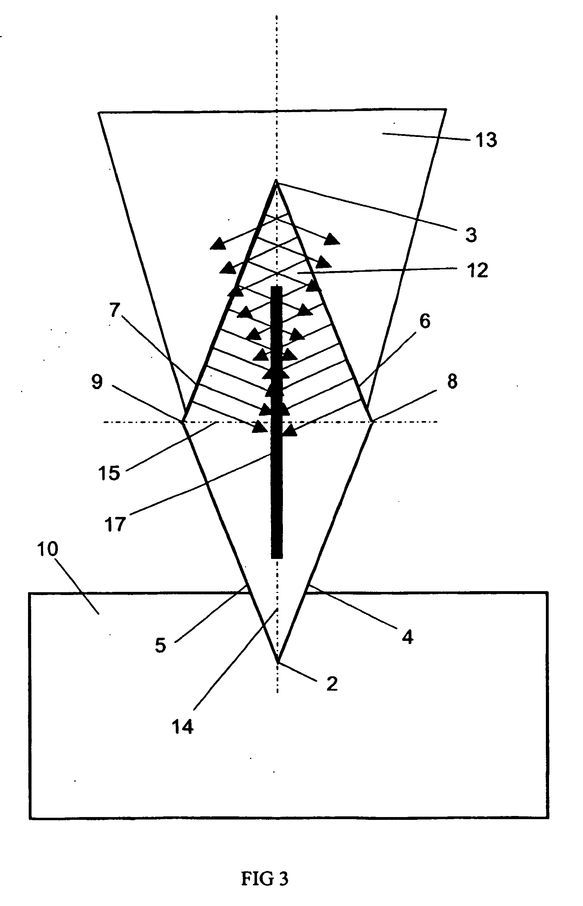

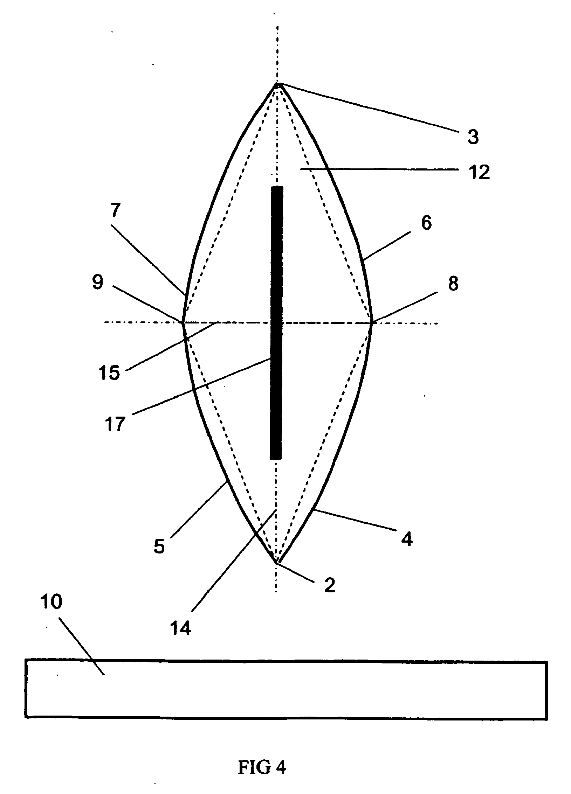

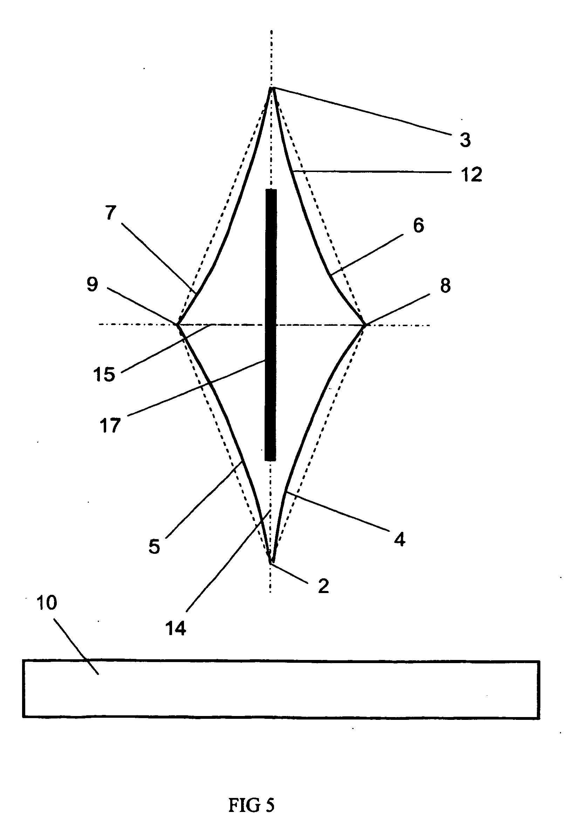

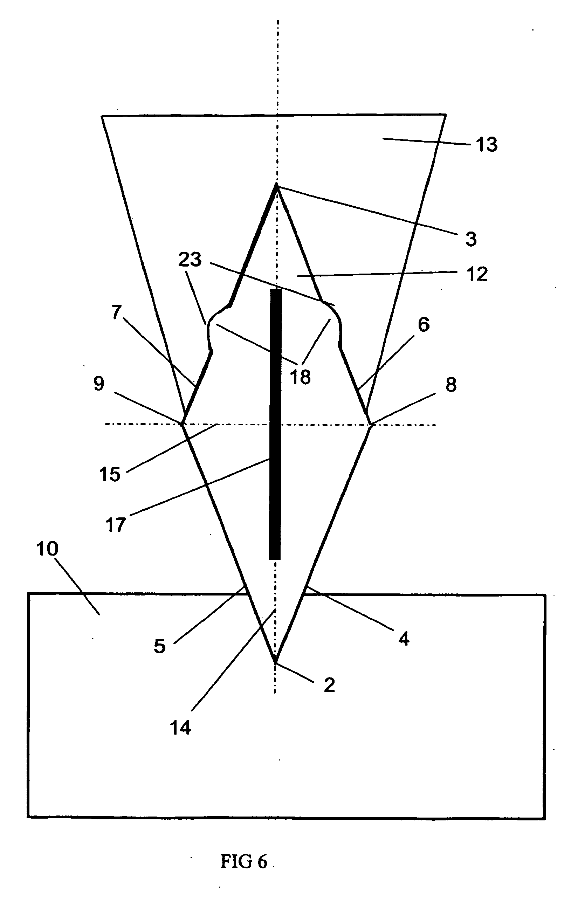

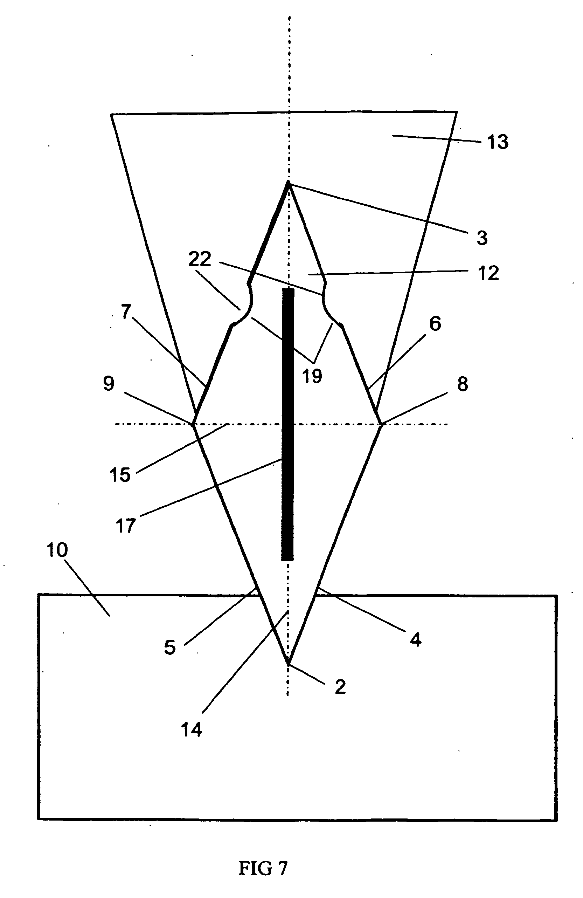

Figure fig 1 general view of the transponder;
Figure fig 2 cross-section of the transponder;
Figure fig 3 cross-section of the transponder when being pressed into the material;
Figure fig 4 cross-section of the transponder with convex sides;
Figure fig 5 cross-section of the transponder with concave sides;
Figure fig 6 cross-section of the transponder with fixing extrusions;
Figure fig 7 cross-section of the transponder with grooves.

### Example of the invention's implementation

The transponder's shell (1) has two wedge shaped edges (2) and (3). The transponder's side surfaces (4), (5) and (6), (7) intersect and form on transponder sides obtuse angled side edges (8), (9) and in the direction of pressing (11) into the material to be marked (10) two sharp angles that serve as wedge shaped edges (2) and (3), where one of the wedge shaped edges together with the side surfaces intersecting there form a support element (12) for fixing the transponder into the seat (13) of the applicator device. The external shape of the transponder is chosen such, that it has two or three crossing symmetry planes (14, (15) and (16), where on of the symmetry planes is perpendicular and the other one is parallel to the surface of the material being marked (10). Electromagnetic sensor (17), for example RFID sensor, is placed inside the transponder shell (1) so, that the sensor is positioned in the centre of the transponder determined by the symmetry planes (14), (15) and (16) and the transponder's external dimensions are chosen such, that the sensor (17) is fitted inside the transponder's shell (1) and the resistance to the failure of the transponder is maximised when being pressed into the material to be marked (10). The obtuse angled side edges (8) and (9) of transponder's side surfaces (4), (5), (6) and (7) are rounded. The sides (4), (5), (6) and (7) of the transponder may be designed as flat, concave or convex surfaces. In the cases of transponder with convex or concave surfaces, such applicator device seat (13) should preferably be used, which's geometry copies the transponder's geometry or has flat surfaces. Transponder side surfaces are equipped with additional fixing extrusions (18) or fixing grooves (19), that may be designed as circular or line elements stretched along the transponder length. When the transponder is being pressed into the material to be marked (10), the compressive force is applied, using the applicator device, to the transponder's side surfaces (6), (7), that form one of the wedge shaped edges (3) so, that the vectors of the compressive forces that are applied to the surfaces intersect in the transponder's symmetry plane (14) which is parallel to the pressing direction (11). The seat (13) of the applicator device is used for transponder indention into the material to be marked (10), that forms sharp angled groove (20), which's tip angle *γ* is equal or smaller than the tip angle 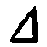 of the transponder's wedge shaped edge (3). The seat (13) of the applicator device is used for transponder indention into the material to be marked (10), where the distance between the seat's surfaces that hold the transponder *A* is less than the distance between the transponder's obtuse angled side edges (8) and (9) *B*. The seat (13) of the applicator device is used for transponder indention into the material to be marked (10), which is equipped with fixing extrusions (22) or fixing grooves (23) or with the fixing extrusions in the ends of the seat, that interlock when the transponder is being fixed in the seat (13), respectively with the transponder's fixing grooves (19) or transponder's fixing extrusions (18) or with transponder end surfaces so, that is being fixed when set into the seat (13) and force will be applied to the applicator device, that presses the transponder together with the seat (13) into the material to be marked (10), the materials elastic forces deliver pressure to the transponder's side surfaces (4) and (5), that creates a friction force, that obstructs the outcoming of the transponder from the material to be marked (10), between the material to be marked (10) and the transponder shell (1), that exceeds the fixing force of the transponder in the applicator device seat (13), after the pressing ended, the applicator device together with the seat (13) will be moved away from the material to be marked (10) and will be freed, due to the forces acting between the material to be marked (10) and transponder, from the seat (13) and it stays fixed in the material to be marked (10).

Due to the external shape of the new transponder the three-dimensional compression is created in the transponder material when it is being pressed into the material to be marked (10) that voids the transponder breakage and also non-uniform deformations in the transponder materials that might cause the failure of the sensor (17). Since the tip angle *γ* of the seat (13) delivering the compressive force is equal or smaller from the tip angle 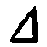 of the transponder's wedge shaped edge (3), in the cases of manufacturing deviations of transponder or seat (13), the transponders side surfaces are deformed evenly, where the compressive force increases evenly in the directions of transponder's side surfaces (8), (9), until the transponder's side surfaces, due to elastic deformations, obtain identical geometrical shape with the seat (13) and transponder is smoothly being pressed into the material to be marked (10) with all the transponder material is uniformly compressed and this ensures the better reliability of transponders and it can be used for marking significantly harder materials. Transponder's application technology will also be simplified, because the transponder's support element (12) should not be oriented towards the seat (13). In the case of two wedge shaped edges it is indifferent, which edge (2) or (3) is used as support element (12) during application and which is used for indentation into the material being marked (10) and therefore it is possible to use simpler and cheaper application devices, where the pre-sorting of transponders is not necessary.

## Claims

1. Transponder, consisting of rigid or semi-rigid shell (1) containing an electromagnetic sensor (17), the shell being equipped with a wedge shaped leading edge (2) and with a support element (6, 7) located opposite to the leading edge (2), where the support element forms a tail-end of the shell opposite to the leading edge (2) for receiving an impact force so that the leading edge (2) determines the direction of indentation of the transponder into the material to be marked (10) and the support element (6, 7) is arranged for fixing the transponder in a respective seat of an applicator device where a holder transfers to the transponder's support element a fixation force in direction to the wedge shaped leading edge, **characterized in that** the support element (6, 7) has a wedge shaped form so that the wedge shaped support element (6, 7) and the wedge shaped leading edge side surfaces (4, 5) form two acute edges (3, 2) on opposing shell sides.

2. Transponder according to claim 1, **characterized in that** the shape of the transponder has two crossing symmetry planes (14, 16; 15) where one of the said planes (14, 16) is perpendicular to the marked material (10) surface.

3. Transponder according to claim 1, **characterized in that** the shape of the transponder has three mutually crossing perpendicular symmetry planes (14, 15, 16).

4. Transponder according to claim 1, **characterized in that** the obtuse side edges (8, 9) are rounded.

5. Transponder according to claim 1, **characterized in that** the side surfaces (4, 5, 6, 7) are made plane.

6. Transponder according to claim 1, **characterized in that** the side surfaces (4, 5, 6, 7) are made concave.

7. Transponder according to claim 1, **characterized in that** the side surfaces (4, 5, 6, 7) are made convex.

8. Transponder according to claim 1, **characterized in that** the side surfaces of the support element (6, 7) are equipped with fixing extrusions (18).

9. Transponder according to claim 1, **characterized in that** the side surfaces of the support element (6, 7) are equipped with additional fixing indents.

10. Method for installing the transponder according to claim 1, **characterized in that** upon indentation of the transponder into the material to be marked (10) by the applicator device, a compressive force is applied on to the side surfaces of the support element (6, 7) crossing in an acute angle so that the resulting vectors of the compressive forces intersect in the symmetry plane of the transponder which is perpendicular with the surface of the material to be marked (10) and in which both acute edges are located.

11. Method according to claim 10, **characterized in that** the seat (13) of the used applicator device has an acute angle groove (20) with a vertex angle which is equal or less than the vertex angle of the transponder acute edge (3).

12. Method according to claim 11, **characterized in that** the maximum distance (A) between the seat's surfaces that hold the transponder is less than the distance (B) between the transponder's obtuse angled side edges (8, 9).

13. Method according to claim 12, **chararterized** in that the seat (13) of the used applicator device is equipped with fixing extrusions (22) which clasp respective transponder indents (19), thereby fixing the transponder in the seat (13) by elastic deformation forces and friction forces, the transponder is indented into the material to be marked (10) together with the applicator seat (13), a friction force is generated between the marked material (10) and the transponder which exceeds the fixing force of the transponder in the seat (13) and the applicator device together with the seat (13) is removed from the marked material (10) and the transponder is released automatically from the seat (13) and is therefore fixed in the material.

14. Method according to claim 12, **characterized in that** the seat (13) of the used applicator device is equipped with fixing indents (23) which clasp respective transponder extrusions (18), thereby fixing the transponder in the seat (13) by elastic deformation forces and friction forces, the transponder is indented into the material to be marked (10) together with the applicator seat (13), a friction force is generated between the marked material (10) and the transponder which exceeds the fixing force of the transponder in the seat (13) and the applicator device together with the seat (13) is removed from the marked material (10) and the transponder is released automatically from the seat (13) and it is therefore fixed in the material to be marked (10).

15. Method according to claim 12, **characterized in that** the seat (13) of the used applicator device is equipped with fixing gripping elements clasping the transponder's support element and fixing the transponder in the seat (13) by elastic deformation forces and friction forces, the transponder is indented into the material to be marked (10) together with the applicator seat (13), a friction force is generated between the material to be marked (10) and the transponder which exceeds the fixing force of the transponder in the seat (13) and the applicator device together with the seat (13) is removed from the marked material (10) and the transponder is released automatically from the seat (13) and is therefore fixed in the material to be marked (10).

## Patentansprüche

1. Transponder, bestehend aus einer festen oder halbfesten Schale (1), welche einen elektromagnetischen Sensor (17) beinhaltet, wobei die Schale mit einer keilförmigen vorderen Kante (2) und einem der vorderen Kante (2) gegenüberliegenden Tragelement (6, 7) versehen ist; das Tragelement stellt ein der vorderen Kante (2) gegenüberliegendes nachlaufendes Ende dar und nimmt Stoßkraft auf, so dass die vordere Kante (2) die Einführungsrichtung des Transponders in das zu markierende Material (10) bestimmt; das Tragelement (6, 7) ist dazu geeignet, den Transponder in einem hierzu bestimmten Sitz einer Montagevorrichtung zu befestigen, wobei ein Halter eine in Richtung der keilförmigen vorderen Kante gerichtete Haltekraft auf das Tragelement des Transponders überträgt; der Transponder ist **gekennzeichnet dadurch, dass** das Tragelement (6, 7) keilförmig ausgebildet ist, so dass das keilförmige Tragelement (6, 7) und die seitlichen Flächen (4, 5) der keilförmigen vorderen Kante zwei spitzwinkelige Kanten (3, 2) an gegenüberliegenden Seiten der Schale bilden.

2. Transponder nach Anspruch 1 ist **gekennzeichnet dadurch, dass** die Form des Transponders zwei sich kreuzende Symmetrieebenen (14, 16; 15) aufweist, wobei eine dieser Ebenen (14, 16) senkrecht zur Oberfläche des zu markierenden Materials verläuft.

3. Transponder nach Anspruch 1 ist **gekennzeichnet dadurch, dass** die Form des Transponders drei sich kreuzende senkrechte Symmetrieebenen (14, 15, 16) aufweist.

4. Transponder nach Anspruch 1 ist **gekennzeichnet dadurch, dass** die stumpfwinkeligen seitlichen Flächen (8, 9) gekrümmt sind.

5. Transponder nach Anspruch 1 ist **gekennzeichnet dadurch, dass** die seitlichen Flächen (4, 5, 6, 7) eben sind.

6. Transponder nach Anspruch 1 ist **gekennzeichnet dadurch, dass** die seitlichen Flächen (4, 5, 6, 7) konkav sind.

7. Transponder nach Anspruch 1 ist **gekennzeichnet dadurch, dass** die seitlichen Flächen (4, 5, 6, 7) konvex sind.

8. Transponder nach Anspruch 1 ist **gekennzeichnet dadurch, dass** die seitlichen Flächen des Tragelements (6, 7) mit Vorsprüngen (18) zur Befestigung versehen sind.

9. Transponder nach Anspruch 1 ist **gekennzeichnet dadurch, dass** die seitlichen Flächen des Tragelements (6, 7) mit zusätzlichen Einrückungen zur Befestigung versehen sind.

10. Verfahren zum Montieren des Transponders nach Anspruch 1 ist **gekennzeichnet dadurch, dass** beim Einführen des Transponder in das durch die Montagevorrichtung zu markierende Material (10) auf die sich in spitzem Winkel schneidenden seitlichen Flächen des Tragelements (6, 7) derart eine Druckkraft aufgebracht wird, dass die resultierenden Vektoren der Druckkräfte sich in der senkrecht zur Oberfläche des durch die Montagevorrichtung zu markierenden Materials (10) verlaufenden und beide spitzwinkeligen Kanten enthaltenden Symmetrieebene des Transponders schneiden.

11. Verfahren nach Anspruch 10 ist **gekennzeichnet dadurch, dass** der Sitz (13) der verwendeten Montagevorrichtung eine spitzwinkelige Nut (20) aufweist, deren Spitzenwinkel gleich oder kleiner dem Spitzenwinkel der spitzwinkelig zulaufenden Kante (3) des Transponders ist.

12. Verfahren nach Anspruch 11 ist **gekennzeichnet dadurch, dass** der Maximalabstand (A) zwischen den den Transponder haltenden Flächen des Sitzes geringer ist als der Abstand (B) zwischen den stumpfwinkeligen seitlichen Kanten (8, 9) des Transponders.

13. Verfahren nach Anspruch 12 ist **gekennzeichnet dadurch, dass** der Sitz (13) in der verwendeten Montagevorrichtung mit Befestigungsvorsprüngen (22), die in zugehörige Einrückungen an dem Transponder (19) eingreifen und hierdurch den Transponder durch Kräfte aus elastischer Deformation und Reibung in dem Sitz (13) halten, versehen wird, der Transponder zusammen mit dem Sitz (13) in der Montagevorrichtung in das zu markierende Material (10) eingeschoben wird, zwischen dem zu markierenden Material (10) und dem Transponder eine Reibkraft erzeugt wird, welche die Haltekraft des Transponders in dem Sitz (13) überschreitet, die Montagevorrichtung zusammen mit dem Sitz (13) von dem markierten Material (10) abgezogen wird, der Transponder automatisch durch den Sitz (13) freigegeben wird und auf diese Weise in dem Material Befestigung findet.

14. Verfahren nach Anspruch 12 ist **gekennzeichnet dadurch, dass** der Sitz (13) in der verwendeten Montagevorrichtung mit Befestigungseinrückungen (23), die in jeweilige Befestigungsvorsprünge (18) an dem Transponder eingreifen und hierdurch den Transponder durch Kräfte aus elastischer Deformation und Reibung in dem Sitz (13) halten, versehen wird, der Transponder zusammen mit dem Sitz in der Montagevorrichtung (13) in das zu markierende Material (10) eingeschoben wird, zwischen dem markierten Material (10) und dem Transponder (10) eine Reibkraft erzeugt wird, welche die Haltekraft des Transponders in dem Sitz (13) überschreitet, die Montagevorrichtung zusammen mit dem Sitz (13) von dem markierten Material (10) abgezogen wird, der Transponder automatisch durch den Sitz (13) freigegeben wird und auf diese Weise in dem Material Befestigung findet..

15. Verfahren nach Anspruch 12 ist **gekennzeichnet dadurch, dass** der Sitz (13) der verwendeten Montagevorrichtung mit Greifelementen zur Befestigung, die am Tragelement des Transponders einrasten und durch welche der Transponder durch Kräfte aus elastischer Deformation und Reibung in dem Sitz (13) gehalten wird, versehen wird, der Transponder zusammen mit dem Sitz in der Montagevorrichtung (13) in das zu markierende Material (10) eingeschoben wird, zwischen dem markierten Material (10) und dem Transponder (10) eine Reibkraft erzeugt wird, welche die Haltekraft des Transponders in dem Sitz (13) überschreitet, die Montagevorrichtung zusammen mit dem Sitz (13) von dem markierten Material (10) abgezogen wird, der Transponder automatisch durch den Sitz (13) freigegeben wird und auf diese Weise in dem Material Befestigung findet.

## Revendications

1. Transpondeur, composé d'un boîtier rigide ou semi-rigide (1) contenant un capteur électromagnétique (17), le boîtier étant muni d'une bord supérieur conique (2) et d'un élément de soutien (6, 7) situé à l'opposé du bord supérieur (2), où l'élément de soutien forme une extrémité du boîtier à l'opposé du bord supérieur (2) pour recevoir une force d'impact de sorte que le bord supérieur (2) détermine la direction du renfoncement du transpondeur dans le matériau (10) à marquer et l'élément de soutien (6, 7) est disposé de manière à fixer le transpondeur dans un logement respectif d'un dispositif applicateur dans lequel un support transfère à l'élément de soutien du transpondeur une force de fixation dans la direction du bord supérieur conique, **caractérisé en ce que** l'élément de soutien (6, 7) a une forme conique de sorte que l'élément de soutien conique (6, 7) et les surfaces latérales du bord supérieur conique (4, 5) forment deux bords saillants (3, 2) sur les côtés opposés du boîtier.

2. Transpondeur selon la revendication 1, **caractérisé en ce que** la forme du transpondeur présente deux plans de symétrie qui se croisent (14, 16 ; 15) et que l'un desdits plans (14, 16) est perpendiculaire à la surface du matériau marqué.

3. Transponder selon la revendication 1, **caractérisé en ce que** la forme du transpondeur présente trois plans de symétrie perpendiculaires qui se croisent mutuellement (14, 15, 16).

4. Transpondeur selon la revendication 1, **caractérisé en ce que** les bords latéraux obtus (8, 9) sont arrondis.

5. Transpondeur selon la revendication 1, **caractérisé en ce que** les surfaces latérales (4, 5, 6, 7) sont rendues planes.

6. Transpondeur selon la revendication 1, **caractérisé en ce que** les surfaces latérales (4, 5, 6, 7) sont rendues concaves.

7. Transpondeur selon la revendication 1, **caractérisé en ce que** les surfaces latérales (4, 5, 6, 7) sont rendues convexes.

8. Transpondeur selon la revendication 1, **caractérisé en ce que** les surfaces latérales de l'élément de soutien (6, 7) sont munies d'extrusions de fixation (18).

9. Transpondeur selon la revendication 1, **caractérisé en ce que** les surfaces latérales de l'élément de soutien (6, 7) sont munies de renforcements de fixation supplémentaires.

10. Méthode d'installation du transpondeur selon la revendication 1, **caractérisée en ce que** lors du renfoncement du transpondeur dans le matériau (10) à marquer par le dispositif applicateur, une force de compression est appliquée aux surfaces latérales de l'élément de soutien (6, 7) qu'elle traverse à un angle aigu de sorte que les vecteurs résultant des forces de compression se croisent dans le plan de symétrie du transpondeur perpendiculaire à la surface du matériau (10) à marquer et dans lequel les deux bords saillants sont situés.

11. Méthode d'installation du transpondeur selon la revendication 10, **caractérisée en ce que** le logement (13) du dispositif applicateur utilisé présente une rainure saillante (20) avec un angle au sommet qui est inférieur ou égal à l'angle au sommet du bord saillant du transpondeur (3).

12. Méthode d'installation du transpondeur selon la revendication 11, **caractérisée en ce que** la distance maximale (A) entre les surfaces du logement qui maintiennent le transpondeur est inférieure à la distance (B) entre les bords latéraux obtus du transpondeur (8, 9).

13. Méthode d'installation du transpondeur selon la revendication 12, **caractérisée en ce que** le logement (13) du dispositif applicateur utilisé est équipé d'extrusions de fixation (22) qui serrent les renfoncements respectifs du transpondeur (19), fixant de ce fait le transpondeur dans le logement (13) grâce à des forces de déformation élastique et des forces de frottement, le transpondeur est renfoncé dans le matériau (10) à marquer avec le logement de l'applicateur (13), une force de frottement est produite entre le matériau marqué (10) et le transpondeur qui dépasse la force de fixation du transpondeur dans le logement (13) et le dispositif applicateur ainsi que le logement (13) sont retirés du matériau marqué (10) et le transpondeur est libéré automatiquement du logement (13) et donc fixé dans le matériau.

14. Méthode d'installation du transpondeur selon la revendication 12, **caractérisée en ce que** le logement (13) du dispositif applicateur utilisé est équipé de renfoncements de fixation (23) qui serrent les extrusions respectives du transpondeur (18), fixant de ce fait le transpondeur dans le logement (13) grâce à des forces de déformation élastique et des forces de frottement, le transpondeur est renfoncé dans le matériau (10) à marquer avec le logement de l'applicateur (13), une force de frottement est produite entre le matériau marqué (10) et le transpondeur qui dépasse la force de fixation du transpondeur dans le logement (13) et le dispositif applicateur ainsi que le logement (13) sont retirés du matériau marqué (10) et le transpondeur est libéré automatiquement du logement (13) et donc fixé dans le matériau (10).

15. Méthode d'installation du transpondeur selon la revendication 12, **caractérisée en ce que** le logement (13) du dispositif applicateur utilisé est équipé d'éléments de préhension serrant l'élément de soutien du transpondeur et fixant le transpondeur dans le logement (13) grâce à des forces de déformation élastique et des forces de frottement, le transpondeur est renfoncé dans le matériau (10) à marquer avec le logement de l'applicateur (13), une force de frottement est produite entre le matériau (10) à marquer et le transpondeur qui dépasse la force de fixation du transpondeur dans le logement (13) et le dispositif applicateur ainsi que le logement (13) sont retirés du matériau marqué (10) et le transpondeur est libéré automatiquement du logement (13) et donc fixé dans le matériau (10).
